# EUROPÄISCHE PATENTSCHRIFT

(11) **EP 1 360 810 B1**
(45) Veröffentlichungstag und Bekanntmachung des Hinweises auf die Patenterteilung: **21.11.2007**
(21) Anmeldenummer: 02702341.5
(22) Anmeldetag: 02.02.2002
(51) Int. Cl.: H04L 29/00

(54) **KOMMUNIKATIONSSYSTEM EINES FAHRZEUGS**
COMMUNICATION SYSTEM FOR A VEHICLE
SYSTEME DE COMMUNICATION POUR UN VEHICULE

(30) Priorität: 08.02.2001 DE 10105858
(43) Veröffentlichungstag der Anmeldung: 12.11.2003
(73) Patentinhaber: DEERE & COMPANY, Moline, Illinois 61265-8098 (US)
(72) Erfinder: RUTZ, Arnold, 66482 Zweibrücken (DE)
(74) Vertreter: Holst, Sönke
(86) Internationale Anmeldenummer: PCT/EP2002/001089
(87) Internationale Veröffentlichungsnummer: WO 2002/063846

(56) Entgegenhaltungen:
- WO-A-00/77621
- US-A- 5 732 074
- US-A- 6 097 425

## Beschreibung

Die Erfindung betrifft ein Kommunikationssystem eines Fahrzeugs, mit einem ersten Bus, an dem mit dem Fahrzeug fest verbundene Einrichtungen angeschlossen sind, die eingerichtet sind, über den ersten Bus untereinander und/oder mit einer am ersten Bus angeschlossenen Steuerung Daten auszutauschen, einem zweiten Bus mit hoher Übertragungsgeschwindigkeit, an dem eine mit einer drahtlos arbeitenden Fernübertragungseinrichtung zusammenwirkende Kommunikationsschnittstelle und eine Busschnittstelle angeschlossen sind, wobei die Kommunikationsschnittstelle eingerichtet ist, über die Fernübertragungseinrichtung mit einer beabstandeten Station Daten auszutauschen, die Busschnittstelle auch mit dem ersten Bus verbunden und eingerichtet ist, Daten vom ersten Bus auf den zweiten Bus und umgekehrt zu übertragen, und der zweite Bus mit einer Computerschnittstelle zum Anschluss eines Computers verbunden ist.

In der EP 0 631 906 A wird vorgeschlagen, eine selbstfahrende landwirtschaftliche Erntemaschine mit einem Netzwerk zur seriellen Kommunikation digitaler Datenbotschaften auszustatten. Das Netzwerk besteht aus sternförmig angeordneten optischen Leitungen, die Datenübertragung zwischen Mikroprozessoren der Erntemaschine ermöglichen.

In der DE 196 47 522 A sind mit Mikroprozessoren ausgestattete Sensoren und Aktoren einer landwirtschaftlichen Arbeitsmaschine in bekannter Weise durch ein CAN-Busnetz mit einem steuernden Mikroprozessor verbunden. Um bei einer Bilddatenübertragung das CAN-Busnetz nicht zu belasten, wird vorgeschlagen, eine Überwachungskamera durch eine vom CAN-Busnetz separate Leitung mit dem Mikroprozessor zu verbinden, der durch eine weitere, vom CAN-Busnetz getrennte Leitung mit einem Bildschirm verbunden ist.

Die WO 00/77621 A beschreibt ein System und Verfahren zur Bereitstellung von Diensten auf einem Fahrzeug. Das Fahrzeug ist mit einem Netzwerk ausgestattet, das mit einer Kommunikationsschnittstelle verbunden ist. Das Netzwerk kann über die Kommunikationsschnittstelle drahtlos Ober einen Internet-Provider mit einem externen Netzwerk verbunden werden. Das Fahrzeug kann weiterhin auch einen Diagnosebus aufweisen, mit dem die Funktionen des Fahrzeugs gesteuert und überwacht werden. Der Diagnosebus kann durch geeignete Schnittstellen mit dem Netzwerk verbunden werden. An das Netzwerk angeschlossene Geräte können Abfragen an das Diagnosebussystem richten und/oder ihm Informationen bereitstellen. Außerdem besteht die Möglichkeit, einen tragbaren Computer an das Netzwerk anzuschließen. Es ist aber keine Möglichkeit offenbart, von einer beabstandeten Station aus Verbindung mit dem Diagnosebussystem aufzunehmen.

In der US 5 732 074 ist ein Kommunikationssystem eines Fahrzeugs beschrieben, bei dem Einrichtungen des Fahrzeugs über einen CAN-Bus miteinander kommunizieren. Der Netzwerkcontroller des CAN-Busses ist über eine Schnittstelle mit einem als Busnetzwerk/Internetprotokollkonverter dienenden Controller verbunden, der über einen Netzwerkprotokollkonverter und ein Modem mit einer Sende- und Empfangseinrichtung in Form eines Mobiltelefons verbunden ist. Ein vom Fahrzeug getrennter Benutzer kann beispielsweise von zu Hause aus mit seinem Computer über das Internet und die Sende- und Empfangseinrichtung des Fahrzeugs Verbindung mit dem Fahrzeug aufnehmen und die Einrichtungen des Fahrzeugs fernsteuern und fernabfragen. An dem als Busnetzwerk/Internetprotokollkonverter dienenden Controller können weitere Peripheriegeräte angeschlossen werden, wie eine PCMCIA-Karteneinheit zur Datenabspeicherung oder ein Modem zur Bereitstellung einer Kommunikation zwischen dem Controller und einer externen Steuereinheit zwecks Fernsteuerung einer Einrichtung des Fahrzeugs. Auf dem Fahrzeug ist jedoch nur der CAN-Bus, aber kein Bus höherer Geschwindigkeit vorgesehen.

Das der Erfindung zugrunde liegende Problem wird darin gesehen, ein verbessertes Kommunikationssystem eines Fahrzeugs bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Bei einem Kommunikationssystem eines Fahrzeugs, das einen ersten, an sich bekannten Bus umfasst, über den mit dem Fahrzeug in der Regel fest verbundene Einrichtungen in Form von Sensoren und Aktoren untereinander und/oder mit einer Steuerung kommunizieren, ist ein zweiter Bus mit hoher Datenübertragungsgeschwindigkeit vorgesehen. Letztere ist deutlich höher als die bekannter CAN-Busse von ca. 1 Mbaud. Der zweite Bus ist über eine Computerschnittstelle mit einem Computer verbindbar, über eine Busschnittstelle mit dem ersten Bus verbunden, und außerdem über eine Kommunikationsschnittstelle mit einer drahtlos wirkenden Fernübertragungseinrichtung (beispielsweise in Form eines GSM-Geräts) verbunden, die eine Verbindung zu einer beabstandeten Station ermöglicht.

Es wird vorgeschlagen, eine Datenübertragung von den mit dem ersten Bus verbundenen Einrichtungen und ggf. mit dem zweiten Bus verbundenen Geräten des Fahrzeugs über die Fernübertragungseinrichtung zu einer beanstandeten Station und umgekehrt erfolgen zu lassen. Eine Ferndiagnose und Fernsteuerung der Einrichtungen und Geräte des Fahrzeugs wird somit möglich. Analog können zu Diagnose- und Steuerungszwecken Daten von den Einrichtungen und Geräten zum Computer und zurück übertragen werden. Außerdem können der Computer und die Geräte mit der beabstandeten Station Daten austauschen oder Aufträge und Pläne empfangen, und vorzugsweise auch eine Verbindung mit anderen Diensten, wie dem Internet oder einem Nachfolgernetz aufnehmen. Eine als selbständiges Element mit dem zweiten Bus verbundene Kommunikationssteuereinrichtung ist eingerichtet, eine virtuelle Verbindung mit mehreren mit dem ersten Bus verbundenen Einrichtungen und/oder mit dem zweiten Bus verbundenen Geräten des Fahrzeugs gleichzeitig herzustellen.

Insbesondere zum Zweck der Verbindung mit anderen Diensten ist der zweite Bus vorzugsweise ein (multimediafähiger) optischer Bus. Alle mit dem zweiten Bus in Verbindung stehenden Geräte und die mit dem ersten Bus verbundenen Einrichtungen können die Fernübertragungseinrichtung nutzen. Es können selbstverständlich anstelle der Daten (oder zusätzlich dazu) auch Programme (Software) übertragen werden.

Obwohl denkbar wäre, als Computer eine stationäre, fest mit dem Fahrzeug verbundene Ausführungsform zu verwenden, ist wegen der Möglichkeit, ihn auch anderweitig einzusetzen, die Verwendung eines abnehmbaren, tragbaren Computers in Form eines Laptops oder dergleichen bevorzugt.

An den zweiten Bus können auch beliebige andere Geräte, insbesondere in Form von Benutzerschnittstellen, wie Palmtops oder Telefonendgeräte angeschlossen werden, erstere in der Regel über eine Infrarotschnittstelle. Über den zweiten Bus, die Kommunikationsschnittstelle und die Fernübertragungseinrichtung kann mit diesen Geräten eine Verbindung zur Außenwelt aufgenommen werden.

Der zweite Bus wird mit einer Kommunikationssteuereinrichtung ausgestattet, die (wie eine Steuerung bei einem CAN-Bus) die Reihenfolge der Übertragung von Daten auf dem zweiten Bus regelt. Sie ist ein selbständig am zweiten Bus angeschlossenes Element. Die Datenübertragung auf dem zweiten Bus kann gemäß einem paketorientierten Datenprotokoll erfolgen. Das Datenprotokoll erlaubt eine gleichzeitige Datenübertragung nicht nur zwischen der Kommunikationssteuereinrichtung und bloß einer Station (Gerät) (point to point), sondern zu mehr als einer Station (Gerät) (point to multi point). Dadurch wird es auch möglich, dem Kommunikationssystem des Fahrzeugs eine IP- (Internet-Protokoll-) Adresse zuzuordnen, und die Adresse stets virtuell erreichbar zu machen.

In der Zeichnung ist ein nachfolgend näher beschriebenes Ausführungsbeispiel der Erfindung dargestellt. Es zeigt:

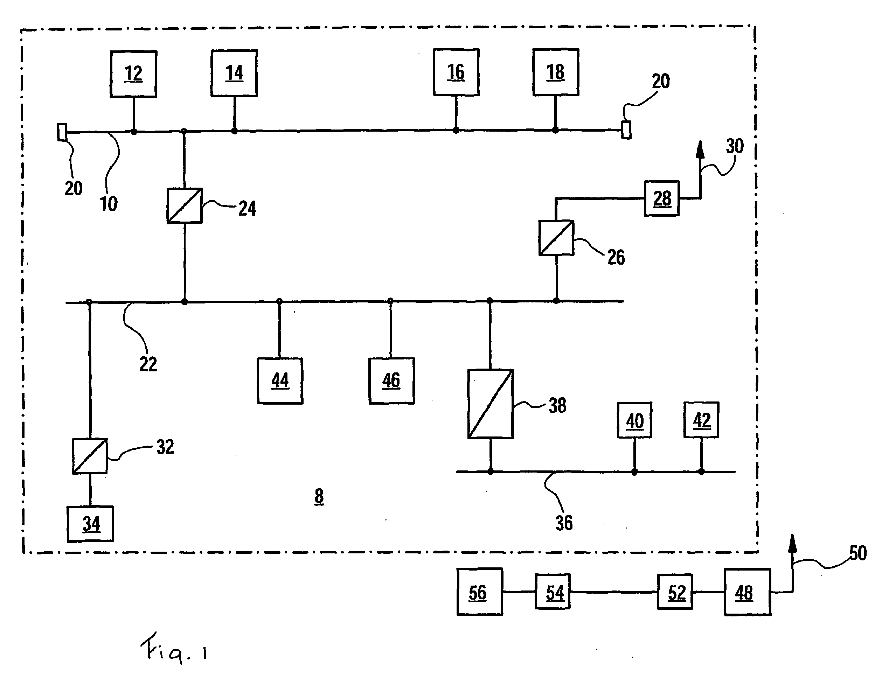

- Fig. 1: ein schematisches Diagramm eines Fahrzeugs mit einem erfindungsgemäßen Kommunikationssystem sowie eine davon beabstandete Station.

In Figur 1 ist ein Fahrzeug 8 schematisch durch die gestrichelten Linien gekennzeichnet. Es kann sich um ein beliebiges Fahrzeug handeln, beispielsweise um ein Personenkraftfahrzeug, einen Lastwagen oder eine Baumaschine. Bevorzugt findet die Erfindung aber an landwirtschaftlichen Fahrzeugen, insbesondere Traktoren oder selbstfahrenden oder gezogenen Erntemaschinen Verwendung, die eine Vielzahl verstell- oder anderweitig bewegbarer Elemente aufweisen, die von einer entfernten Station aus oder mittels eines an Bord des Fahrzeugs befindlichen Computers gesteuert bzw. kontrolliert werden können. Auch kann die Leistung des Motors oder anderer Komponenten der Maschine, z. B. Gutbearbeitungselemente, überwacht werden, indem an der Maschine aufgenommene Daten auf einen Computer übertragen und dort ausgewertet werden. Anhand der Auswertung können wiederum Steuerungsdaten zur Maschine abgegeben werden. Somit ist die Verwendung des erfindungsgemäßen Kommunikationssystems an landwirtschaftlichen Maschinen besonders vorteilhaft.

Das Kommunikationssystem des Fahrzeugs 8 weist einen ersten Bus 10 in Form eines CAN-Busses auf, der endseitig durch Abschlusswiderstände 20 abgeschlossen ist. An den ersten Bus 10 ist ein Sensor 12 angeschlossen, der den Zustand eines Fahrzeugelements erfasst. Der Sensor 12 ist mit einem Mikroprozessor ausgestattet, der über eine externe oder integrierte Datenübertragungsschnittstelle regelmäßig oder auf eine äußere Anfrage hin ein Datenpaket, das eine Bestimmungsadresse und einen Messwert beinhaltet, über den ersten Bus 10 aussendet. An den ersten Bus 10 sind weiterhin zwei Aktoren 16 und 18 angeschlossen, die ebenfalls durch zugeordnete Mikroprozessoren gesteuert werden und über den ersten Bus 10 Befehle erhalten. Eine Steuerung 14 kontrolliert die Datenübertragung, empfängt die Werte des Sensors 12 und sendet Daten an die Aktoren 16, 18 ab. Die Aktoren bewegen Fahrzeugelemente. Der erste Bus 10 ist als CAN-Bus hinreichend dokumentiert, so dass sich eine detailliertere Beschreibung erübrigt.

Ein zweiter Bus 22 in Form eines optischen Faserbusses ist über eine Busschnittstelle 24 mit dem ersten Bus 10 verbunden. An den zweiten Bus 22 ist weiterhin eine Kommunikationsschnittstelle 26 angeschlossen, die ihrerseits mit einer Fernübertragungseinrichtung 28 in Verbindung steht, welche eingerichtet ist, über eine erste Antenne 30 durch elektromagnetische Wellen drahtlos über eine zweite Antenne 50 mit einer beabstandeten, zweiten Fernübertragungseinrichtung 48 zu kommunizieren. Die Kommunikation kann nach dem GSM-Standard (also in Deutschland über das D- oder E-Mobilfunknetz) oder über ein anderes Funknetz erfolgen.

An den zweiten Bus 22 ist eine Computerschnittstelle 32, angeschlossen, die zum lösbaren Anschließen eines tragbaren Computers 34 dient. Eine zweite Busschnittstelle 38 verbindet den zweiten Bus 22 mit einem dritten Bus 36, an dem ein virtuelles Terminal 40 und eine GPS-Antenne 42 angeschlossen Computers 34 dient. Eine zweite Busschnittstelle 38 verbindet den zweiten Bus 22 mit einem dritten Bus 36, an dem ein virtuelles Terminal 40 und eine GPS-Antenne 42 angeschlossen sind. An den dritten Bus können weitere, in der Zeichnung nicht vorgesehene Sensoren beispielsweise für den Gutdurchsatz einer Erntemaschine angeschlossen sein, die Zwecken der Präzisionslandwirtschaft dienlich sind. An den dritten Bus 36, der in Funktion und Aufbau dem ersten Bus 10 entspricht, können fest mit dem Fahrzeug 8 verbundene oder lösbare Geräte angeschlossen sein.

An den zweiten Bus 22 ist ein Gerät in Form eines Telefonhand- oder -endgeräts 44 angeschlossen. Es ermöglicht den Aufbau einer Telefonverbindung nach außen über den zweiten Bus, die Kommunikationsschnittstelle und die Fernübertragungseinrichtung 28.

Die Fernübertragungseinrichtung 28 kann auch in die Kommunikationsschnittstelle 26 integriert werden. Die Kommunikationsschnittstelle 26 steuert den Datenverkehr auf dem zweiten Bus 22. Auf dem zweiten Bus 22 kann ein paketorientiertes Datenübertragungsprotokoll Verwendung finden, das eine virtuell gleichzeitige Kommunikation von einem am zweiten Bus 22 angeschlossenen Sender mit mehreren Empfängern ermöglicht. So kann der Computer 34 virtuell gleichzeitig die Busschnittstelle 24 und die zweite Busschnittstelle 38 ansprechen. Eine mit dem zweiten Bus (22) verbundene Kommunikationssteuereinrichtung (46) ist eingerichtet, eine virtuelle Verbindung mit mehreren mit dem ersten Bus (10) verbundenen Einrichtungen und/oder mit dem zweiten Bus (22) verbundenen Geräten des Fahrzeugs (8) gleichzeitig herzustellen.

Die vom Fahrzeug 8 beabstandeten Einrichtungen, mit denen eine Verbindung aufgenommen werden kann, umfassen die zweite Antenne 50, die zweite Fernübertragungseinrichtung 48, ein erstes Netzwerkmodem 52, das über das Internet oder eine andere Verbindung mit einem zweiten Netzwerkmodem 54 verbunden ist, und einen stationären oder transportablen Computer 56. Der Computer 56 empfängt Daten vom Fahrzeug über die erste Fernübertragungseinrichtung 28, die erste Antenne 30, die drahtlose, elektromagnetische Wellen nützende Verbindung, die zweite Antenne 50 und die zweite Datenübertragungsvorrichtung 48, welche die Daten über das erste Netzwerkmodem 52 via Internet ans zweite Netzwerkmodem 54 sendet. In entgegengesetzter Richtung sendet der Computer 56 Daten an das Fahrzeug 8. Der Computer 56 steht beispielsweise im Büro des Eigentümers des Fahrzeugs 8 oder ist in der beschriebenen Art und Weise auf einem anderen Fahrzeug installiert.

Das Kommunikationssystem ermöglicht zu Diagnosezwecken (auf eine entsprechende Anfrage) die Übertragung von Daten vom Sensor 12 an die Computer 34 und 56. Es ermöglicht auch, zu Steuerungszwecken Daten vom Computer 34 bzw. 56 an die Aktoren 16 und 18 zu senden. Der Computer 34 könnte daher an Stelle der Steuerung 14 als abnehmbarer Bordrechner dienen. Auch auf dem dritten Bus 36 bereitstehende (Präzisionslandwirtschafts-) Daten können an die Computer 34 und 56 übertragen werden. Weiterhin erlaubt der zweite Bus einen multimediafähigen Zugang des Computers 34 zum Internet oder zu anderen Diensten, wie Digitalfernsehen, wobei der der erste Bus nicht belastet wird.

Im Ergebnis wird es möglich, Zugriff auf die Daten eines maschinen- bzw. fahrzeugeigenen Bussystems (Bus 10), auf Daten eines Busses der Präzisionslandwirtschaft (Bus 36) zu erhalten und zusätzlich einen Hochgeschwindigkeitsdatentransfer anzuwenden, der zur Implementation z. B. von Internetdiensten notwendig ist. Das wird unter Benutzung einer einzigen Fernübertragungseinrichtung 28, die vorteilhafterweise ausgetauscht und so den jeweils angemessenen Funkübertragungsverfahren angepasst werden kann, möglich.

## Patentansprüche

1. Kommunikationssystem eines Fahrzeugs (8), mit einem ersten Bus (10), an dem mit dem Fahrzeug (8) fest verbundene Einrichtungen (12, 16, 18) angeschlossen sind, die eingerichtet sind, über den ersten Bus (10) untereinander und/oder mit einer am ersten Bus (10) angeschlossenen Steuerung (14) Daten auszutauschen, einem zweiten Bus (22) mit einer Übertragungsgeschwindigkeit, die höher als die des ersten Busses (10) ist, wobei an dem zweiten Bus (22) eine mit einer drahtlos arbeitenden Fernübertragungseinrichtung (28) zusammenwirkende Kommunikationsschnittstelle (26) und eine Busschnittstelle (24) angeschlossen sind, wobei die Kommunikationsschnittstelle (26) eingerichtet ist, über die Fernübertragungseinrichtung (28) mit einer beabstandeten Station Daten auszutauschen, die Busschnittstelle (24) auch mit dem ersten Bus (10) verbunden und eingerichtet ist, Daten vom ersten Bus (10) auf den zweiten Bus (22) und umgekehrt zu übertragen, und der zweite Bus (22) mit einer Computerschnittstelle (32) zum Anschluss eines Computers (34) verbunden ist, **dadurch gekennzeichnet, dass** Daten von den Einrichtungen (12, 16, 18) und/oder der Steuerung (14) des Fahrzeugs (8) zur beabstandeten Station und/oder umgekehrt übertragbar sind, und zwar über den ersten Bus (10), die Busschnittstelle (24), den zweiten Bus (22), die Kommunikationsschnittstelle (26) und die Fernübertragungseinrichtung (28), und dass mit dem zweiten Bus (22) eine als selbständiges Element am zweiten Bus (22) angeschlossene Kommunikationssteuereinrichtung (46) verbunden ist, die eingerichtet ist, eine virtuelle Verbindung mit mehreren mit dem ersten Bus (10) verbundenen Einrichtungen und mit dem zweiten Bus (22) verbundenen Geräten des Fahrzeugs (8) gleichzeitige herzustellen.

2. Kommunikationssystem nach Anspruch 1, **dadurch gekennzeichnet, dass** der Computer (34) abnehmbar ist.

3. Kommunikationssystem nach einem der Ansprüche 1 oder 2, **dadurch gekennzeichnet, dass** der zweite Bus (22) eingerichtet ist, optisch zu arbeiten.

4. Kommunikationssystem nach einem der Ansprüche 1 bis 3, **dadurch gekennzeichnet, dass** der Computer (34) eingerichtet ist, über den zweiten Bus (22), die Kommunikationsschnittstelle (26) und die Fernübertragungseinrichtung (28) mit der beabstandeten Station und/oder anderen Diensten, z.B dem Internet, Verbindung aufzunehmen.

5. Kommunikationssystem nach einem der Ansprüche 1 bis 4, **dadurch gekennzeichnet, dass** es derart aufgebaut ist, dass Daten von den Einrichtungen (12, 16, 18) und/oder der Steuerung (14) des Fahrzeugs (8) über den ersten Bus (10), die Busschnittstelle (24), den zweiten Bus (22) und die Computerschnittstelle (32) zum Computer (34) und/oder umgekehrt übertragbar sind.

6. Kommunikationssystem nach einem der vorhergehenden Ansprüche, **dadurch gekennzeichnet, dass** mindestens ein Gerät an den zweiten Bus (22) anschließbar ist.

7. Kommunikationssystem nach Anspruch 6, **dadurch gekennzeichnet, dass** das Gerät eine weitere Benutzerschnittstelle ist.

8. Kommunikationssystem nach Anspruch 7, **dadurch gekennzeichnet, dass** die Benutzerschnittstelle ein Telefonhandgerät (44) oder ein Palmtop ist.

## Claims

1. Communication system for a vehicle (8), having a first bus (10) to which devices (12, 16, 18) which are permanently connected to the vehicle (8) are connected, said devices being configured to exchange data with one another via the first bus (10) and/or with a controller (14) which is connected to the first bus (10), a second bus (22) with a transmission speed which is higher than that of the first bus (10), wherein a communications interface (26), which interacts with a wirefree remote-transmission device (28), and a bus interface (24) are connected to the second bus (22), wherein the communications interface (26) is configured to exchange data via the remote transmission device (28) with a remote station, the bus interface (24) is also connected to the first bus (10) and configured to transmit data from the first bus (10) to the second bus (22) and vice versa, and the second bus (22) is connected to a computer interface (32) for the connection of a computer (34), **characterized in that** data can be transmitted from the devices (12, 16, 18) and/or the controller (14) of the vehicle (8) to the remote station and/or vice versa, specifically via the first bus (10), the bus interface (24), the second bus (22), the communication interface (26) and the remote transmission device (28), and **in that** a communication control device (46) is connected to the second bus (22), said communication control device (46) being connected thereto as an independent element and being configured to set up a virtual connection to a plurality of devices, connected to the first bus (10), and at the same time to devices of the vehicle (8) which are connected to the second bus (22).

2. Communication system according to Claim 1, **characterized in that** the computer (34) is removable.

3. Communication system according to one of Claims 1 or 2, **characterized in that** the second bus (22) is configured to operate optically.

4. Communication system according to one of Claims 1 to 3, **characterized in that** the computer (34) is configured to set up a connection with the remote station and/or other services, for example the Internet, via the second bus (22), the communications interface (26) and the remote transmission device (28).

5. Communication system according to one of Claims 1 to 4, **characterized in that** it is set up in such a way that data can be transmitted from the devices (12, 16, 18) and/or the controller (14) of the vehicle (8) to the computer (34) and/or vice versa via the first bus (10), the bus interface (24), the second bus (22) and the computer interface (32).

6. Communication system according to one of the preceding claims, **characterized in that** at least one device can be connected to the second bus (22).

7. Communication system according to Claim 6, **characterized in that** the device is a further user interface.

8. Communication system according to Claim 7, **characterized in that** the user interface is a telephone handset (44) or a palmtop.

## Revendications

1. Système de communication d'un véhicule (8), comprenant un premier bus (10), sur lequel sont raccordés des dispositifs (12, 16, 18) reliés de façon fixe au véhicule (8), lesquels sont aménagés pour échanger des données au moyen du premier bus (10) entre eux et/ou avec une commande (14) raccordée au premier bus (10), un second bus (22) avec une vitesse de transmission qui est supérieure à celle du premier bus (10), une interface de communication (26) coopérant avec un dispositif de télétransmission (28) travaillant sans fil et une interface de bus (24) étant raccordées au second bus (22), l'interface de communication (26) étant aménagée pour échanger des données au moyen du dispositif de télétransmission (28) avec une station espacée, laquelle interface de bus (24) est reliée également au premier bus (10) et aménagée pour transmettre des données du premier bus (10) au second bus (22) et inversement, et le second bus (22) étant relié à une interface d'ordinateur (32) pour le raccordement d'un ordinateur (34), **caractérisé en ce que** des données peuvent être transmises aux dispositifs (12, 16, 18) et/ou de la commande (14) du véhicule (8) à la station espacée et/ou inversement, et ce au moyen du premier bus (10), de l'interface de bus (24) et du second bus (22), de l'interface de communication (26) et du dispositif de télétransmission (28), et **en ce qu'**un dispositif de commande de communication (46) raccordé en tant qu'élément autonome au second bus (22) est relié au second bus (22), lequel dispositif est aménagé pour établir simultanément une liaison avec plusieurs dispositifs reliés au premier bus (10) et plusieurs appareils reliés au second bus (22) du véhicule (8).

2. Système de communication selon la revendication 1, **caractérisé en ce que** l'ordinateur (34) est amovible.

3. Système de communication selon l'une quelconque des revendications 1 ou 2, **caractérisé en ce que** le second bus (22) est aménagé pour travailler de façon optique.

4. Système de communication selon l'une quelconque des revendications 1 à 3, **caractérisé en ce que** l'ordinateur (34) est aménagé pour établir une liaison au moyen du second bus (22), de l'interface de communication (26) et du dispositif de télétransmission (28) avec la station espacée et/ou d'autres services, par exemple Internet.

5. Système de communication selon l'une quelconque des revendications 1 à 4, **caractérisé en ce qu'**il est conçu de telle sorte que des données peuvent être transmises par les dispositifs (12, 16, 18) et/ou de la commande (14) du véhicule (8) par le premier bus (10), l'interface de bus (24), le second bus (22) et l'interface d'ordinateur (32) à l'ordinateur (34) et/ou inversement.

6. Système de communication selon l'une quelconque des revendications précédentes, **caractérisé en ce qu'**au moins un appareil peut être raccordé au second bus (22).

7. Système de communication selon la revendication 6, **caractérisé en ce que** l'appareil est une autre interface utilisateur.

8. Système de communication selon la revendication 7, **caractérisé en ce que** l'interface utilisateur est un téléphone portable (44) ou un ordinateur portable.
